# EUROPEAN PATENT APPLICATION

(11) **EP 2 343 591 A1**
(43) Date of publication of application: **13.07.2011**
(21) Application number: 09306318.8
(22) Date of filing: 23.12.2009
(51) Int. Cl.: G02C 7/02, G02B 27/01, G02F 1/29

(54) **Eyeglass adapted for providing an ophthalmic vision and a supplementary vision**

(71) Applicant: ESSILOR INTERNATIONAL (Compagnie Générale d'Optique), 94220 Charenton le Pont (FR)
(72) Inventor: Berthelot, Laurent, 94220, CHARENTON LE PONT (FR); Gelly, Gérard, 94220, CHARENTON LE PONT (FR); Roptin, Vincent, 94220, CHARENTON LE PONT (FR); Rousseau, Benjamin, 94220, CHARENTON LE PONT (FR); Videmann, Antoine, 94220, CHARENTON LE PONT (FR)
(74) Representative: Cabinet Plasseraud

(57) **Abstract**

An eyeglass (10) is adapted for providing an ophthalmic vision and a supplementary vision to a wearer of said eyeglass, both ophthalmic and supplementary visions being sharp during respective periods. To this purpose, a transparent active device (3) is located between the back face (BF) of the eyeglass and a light-conducting element (2), this latter being embedded within the eyeglass and dedicated to ouput the light of the supplementary vision. The transparent active device switches between two optical power values, which are dedicated to make sharp the ophthalmic vision and the supplementary vision, respectively.

## Description

### -- FIELD OF THE INVENTION --

The invention relates to an eyeglass adapted for providing both an ophthalmic vision and a supplementary vision to a wearer of this eyeglass.

### -- BACKGROUND OF THE INVENTION --

Such eyeglasses are already known, for example from WO 2008/003903.

The ophthalmic vision is the usual or natural vision by the wearer of actual objects existing in his environment. It may be improved by using ametropia-correcting eyeglasses or solar eyeglasses, for example. But such eyeglasses do not modify the information content of the image.

The supplementary vision is intended to provide the wearer with supplementary information, or extra information. This supplementary information may be data which are displayed for the wearer to see them. For example, piloting data may be displayed on the visor of a pilot helmet, so that these data appear superposed to the image of the ophthalmic vision. Another example of supplementary vision is to supply the wearer with modified images of parts of his environment. Such modified images may be magnified images of infrared images converted into visible light images.

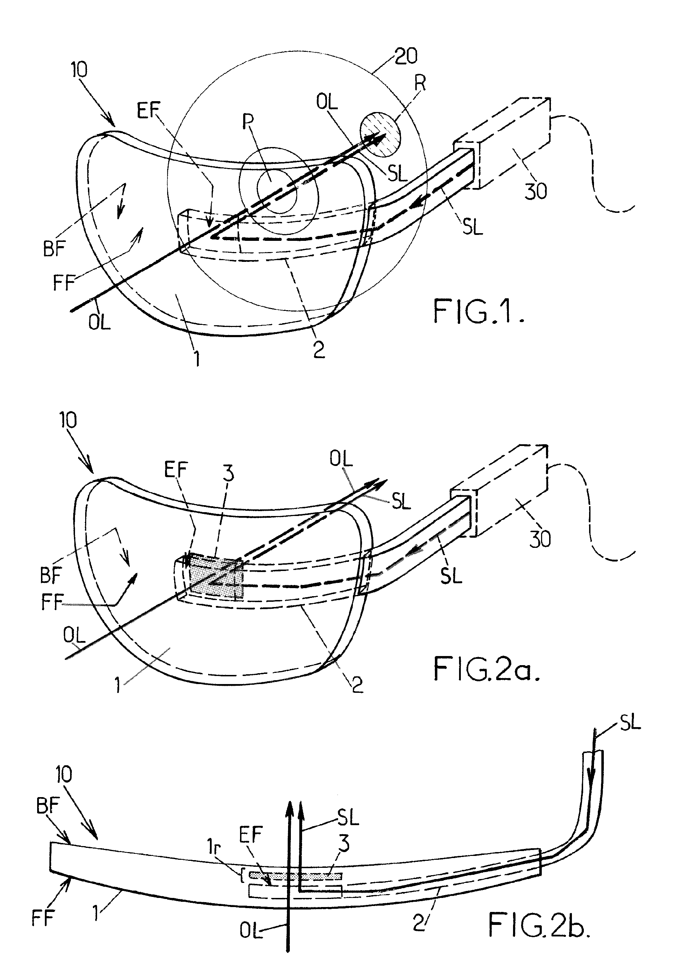

Referring to Figure 1, an eyeglass 10 which is adapted for providing at least the ophthalmic vision and the supplementary vision to the wearer may comprise:
- a front face FF and a back face BF, which are intended to be oriented respectively away from and towards an eye 20 of the wearer;
- a light-refracting transparent material 1, which is comprised between the front face FF and the back face BF; and
- a light-conducting element 2, which is located in the light-refracting transparent material 1, and adapted to output a supplementary light SL between the front face FF and the back face BF of the eyeglass 10, through an exit face EF of this light-conducting element 2 and towards the wearer's eye 20.

The exit face EF of the light-conducting element 2 is thus oriented towards the eye 20, so that the supplementary light SL enters into the eye 20 through the eye pupil P and reaches the retina R. Reference number 30 denotes a source unit which produces the supplementary light SL so that this latter corresponds to a supplementary image after being output through the exit face EF. Details of such source unit 30 are well-known so that it is not necessary to repeat them here. This source unit 30 introduces the supplementary light SL into the light-conducting element 2 through an appropriate optical connexion therebetween.

The ophthalmic vision corresponds to the image formed by light OL transmitted by the eyeglass 10 from its front face FF to its back face BF, also entering into the eye 20 through the pupil P and reaching the retina R. The image of the ophthalmic vision is called natural image thereafter.

The supplementary vision corresponds to the supplementary image to be viewed by the wearer, which is formed by the supplementary light SL.

Furthermore, the light-conducting element 2 is transparent for the light OL of the ophthalmic vision. Thus, the eyeglass 10 is capable of providing both the natural image and the supplementary image to the wearer, simultaneously or even alternatively.

Because the front face FF and the back face BF have respective curvatures, they each produce an optical power. Since the light OL which is efficient for the ophthalmic vision intersects both the front face FF and the back face BF of the eyeglass 10, the optical power of this eyeglass for the ophthalmic vision is the algebraic sum of the respective optical powers of the two faces. But the supplementary light SL is output by the light-conducting element 2 between the two eyeglass faces FF and BF, so that it intersects only the back face BF when propagating towards the wearer's eye 20. So only the optical power of this back face BF is efficient for the supplementary vision. Thus the eyeglass 10 produces effective optical powers which are different for the ophthalmic vision and the supplementary vision. As a consequence, the natural image and the supplementary image do not appear sharp at the same time to the wearer.

One possibility for the two images to be sharp at the same time on the wearer's retina R is to provide the source unit 30 with a focussing unit. Such focussing unit can be adjusted so that the supplementary image is formed on the retina R at the same time the eye 20 is focussed for staring at the natural image. Then both images appear sharp, but such focussing unit is expensive and needs to be operated by the wearer.

According to WO 2008/003903, another possibility is to limit the curvature of the front face FF so as to maintain the optical power produced by this face below an accommodation threshold of the eye 20. Then, the light OL of the ophthalmic vision is not much altered by the front face FF of the eyeglass 10, and the light beams of both the ophthalmic vision and the supplementary vision are affected in a similar extent by the eyeglass 10. But the accommodation threshold varies depending on the wearer. In addition, the limited curvature of the front face of the eyeglass generates optical distortions for oblique gaze directions.

A third possibility is to design the back face BF of the eyeglass 10 for producing an appropriate optical power for the supplementary image being focussed on the wearer's retina R. Then the front face FF can be adjusted so as to focus the natural image on the retina R through the back face BF. But according to this method, both faces BF and FF of the eyeglass 10 have to be adjusted once the ametropia of the wearer is known. Therefore, using semi-finished eyeglasses with one of the faces thereof being final from the semi-finished eyeglass production is not possible. In addition, the curvatures of both faces FF and BF may generate important optical distortions for the natural image.

Then, a first object of the present invention is to provide an eyeglass with both the ophthalmic and the supplementary vision, with the natural image and the supplementary image being focussed sharply on the wearer's retina during respective periods.

A second object of the invention is to provide such eyeglass which does not generate significant distortions at least for the natural image.

A third object of the invention is to provide such eyeglass which can be produced using the semi-finished eyeglass production stage.

### -- SUMMARY OF THE INVENTION --

To this purpose, the invention proposes an eyeglass adapted for providing at least the ophthalmic vision and the supplementary vision to the wearer with the features recited above, and which further comprises a transparent active device. This device is located between the exit face of the light-conducting element and a portion at least of the back face of the eyeglass. It is also adapted for producing a variable optical power depending on a control signal which is supplied to this transparent active device. Then, first and second values for the variable optical power are different from each other, and correspond respectively to a first and a second state of the transparent active device.

First and second states of the transparent active device are respectively dedicated to the supplementary vision and the ophthalmic vision. Thus, the transparent active device in the first state is effective for the supplementary light, and the first value of the variable optical power is suitable for the supplementary image to appear sharp to the wearer. Furthermore, the light-conducting element is transparent for the light of the ophthalmic vision. Then, the transparent active device is effective in the second state for the light of the ophthalmic vision which is transmitted through the exit face of the light-conducting element, and the second value of the variable optical power is suitable for the natural image to appear sharp to the wearer in turn.

Hence, the natural image and the supplementary image are focussed on the wearer's retina during periods where the transparent active device is in the second and the first state, respectively.

Because the appropriate optical power for the supplementary vision is provided by the transparent active device, the front face and optionally the back face of the eyeglass can be optimized for the ophthalmic vision. Then, this or these face(s) can be designed so that the natural image is devoid of any important optical distortions. In addition, the front face and the back face of the eyeglass may be used for providing the wearer with an appropriate ametropia correction, which is effective for the ophthalmic vision. In such case, the transparent active device cooperates with the back face of the eyeglass for correcting the wearer's ametropia for the supplementary vision, depending on the location of the supplementary image as output directly by the light-conducting element.

In a preferred embodiment of the invention, the transparent active device may be entirely embedded in a rear portion of the light-refracting transparent material, which is located between the exit face of the light-conducting element and the back face of said eyeglass.

In such case, because the supplementary image is focussed on the wearer's retina independently of the front face of the eyeglass, this eyeglass can be produced using the intermediate stage of semi-finished eyeglass. Such semi-finished eyeglass may comprise a portion of the light-refracting transparent material with a final front face, and with the light-conducting element and the transparent active device both embedded therein. Then, semi-finished eyeglasses may form a collection with variable front face mean curvature values, also called base values. This is especially cost-effective, because the semi-finished eyeglasses can be mass-produced in large scale plants, and the back face of each semi-finished eyeglass can be shaped according to a user's prescription in laboratories out of the large scale plants. So the invention makes it possible to produce finished eyeglasses with ophthalmic and supplementary visions using the same production scheme as already implemented for usual eyeglasses.

### -- BRIEF DESCRIPTION OF THE DRAWINGS --

Figure 1 is a perspective view of an eyeglass known before the present invention.
Figure 2a and 2b are respectively a perspective view and a sectional view of an eyeglass according to the present invention.
Figure 3a and 3b are respectively a front view and a sectional view of a transparent active device which may be used in an embodiment of the present invention.
Figures 4 and 5 are respective sectional views of other transparent active devices which may be used in alternative embodiments of the present invention.

For sake of clarity, the elements represented in these figures are not sized in relation with actual dimensions, nor with ratios of actual dimensions. In addition, same reference signs indicated in different figures denote similar elements or elements with similar functionalities.

### -- DETAILED DESCRIPTION OF THE INVENTION --

Figure 1 which relates to prior art has already been described.

According to Figures 2a and 2b, an eyeglass 10 according to the invention comprises the same elements as the eyeglass of Figure 1, namely the light-refracting transparent material 1 limited by the front face FF and the back face BF of the eyeglass, and the light-conducting element 2 with its exit face EF for the supplementary light SL. The light-conducting element 2 is preferably entirely embedded within the light-refracting material 1, so that a rear portion 1 r of the light-refracting transparent material 1 is located between the exit face EF of the light-conducting element 2 and the back face BF of the eyeglass 10. The light-refracting transparent material 1 extends continuously between the light-conducting element 2 and the front face FF.

The light-refracting transparent material 1 may be any material commonly used in ophthalmics.

The light-conducting element 2 may be of any design already known and described in documents focussed on such element.

The source unit 30 does not pertain to the eyeglass 10 which is the subject-matter of the present invention. It produces the supplementary light SL and inputs it into the light-conducting element 2.

The eyeglass 10 of the invention further comprises a transparent active device 3, which is located between the exit face EF of the light-conducting element 2 and the back face BF of the eyeglass. When the rear portion 1 r exists for the light-refracting transparent material 1, the transparent active device 3 is preferably contained in this rear portion. Preferably but not necessarily, it is entirely embedded within the rear portion 1 r.

The transparent active device 3 extends parallel to the back face BF over an area which is at least equal to the projected area of the exit face EF of the light-conducting element 2. Preferably, the respective areas of the transparent active device 3 and the exit face EF match each other when projected onto the back face BF of the eyeglass 10 along light rays of the ophthalmic vision.

Mainly, the transparent active device 3 operates like a controllable lens, which produces an optical power that can vary between two values different from each other. One of these values for the variable optical power of the transparent active device 3 may be zero.

In simple embodiments of the invention, the transparent active device 3 may be liquid crystal-based.

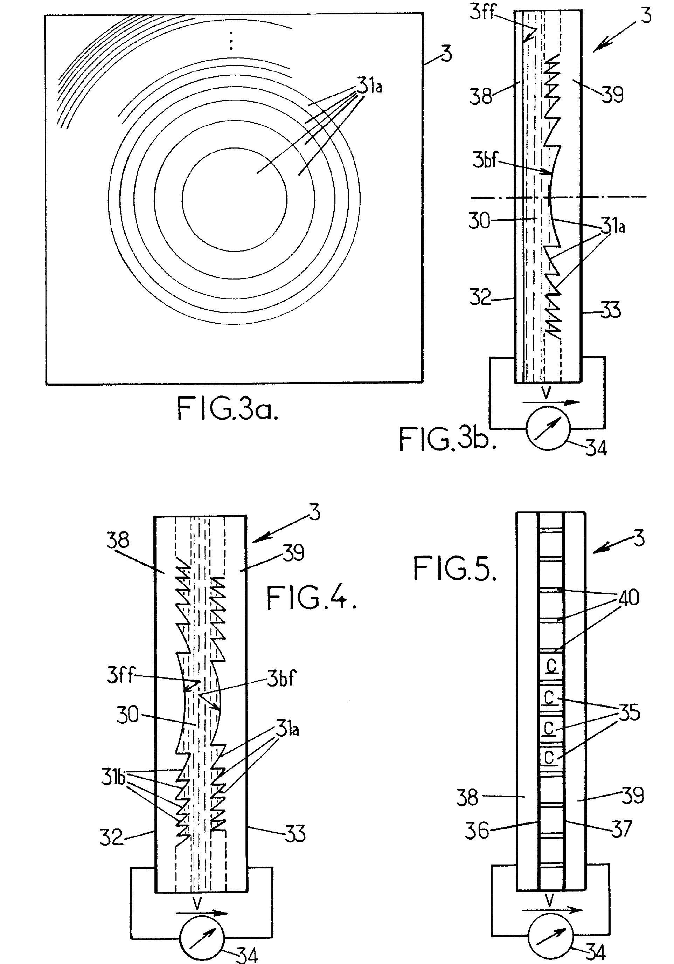

In first and second embodiments, the transparent active device may comprise a portion of liquid crystal which is contained between two surfaces, with at least one of these surfaces being provided with a Fresnel pattern. It further comprises two electrodes which are arranged for modifying an orientation of the liquid crystal upon a variation of an electrical voltage V that is applied to said electrodes. Figures 3a and 3b illustrate such first embodiment with a Fresnel pattern provided on only one of the surfaces limiting the liquid crystal portion. Such device structure is described in particular in document WO 2009/045533. Figure 4 illustrates a second embodiment with two Fresnel patterns which are provided respectively on the two surfaces which limit the liquid crystal portion, as described in US 2007/216851. In these figures, the following reference numbers denote the elements now listed:
30: the portion of liquid crystal,
3ff, 3bf: front surface and back surface limiting the liquid crystal portion 30,
31 a, 31 b: Fresnel patterns,
32, 33: electrodes,
34: an electric power supply generating the variable voltage V, and
38, 39: plates containing the portion of liquid crystal 30 therebetween.

Thanks to the plates 38 and 39, the transparent active device 3 can be manufactured separately at first, and embedded afterwards together with the light-conducting element 2 within the light-refracting material 1, during the moulding of the eyeglass 10.

The actual operation of these devices is well-known, so that is not necessary to repeat it again in this description. In particular, at last one of the surfaces 3ff and 3bf of the each device 3 may be structured so as to orientate the liquid crystal portion 30 when the electrical voltage V is zero or below a switching threshold.

In a third embodiment illustrated by Figure 5, the transparent active device 3 may comprise a set of cells C which are juxtaposed parallel to the exit face EF of the light-conducting element 2 in the eyeglass 10. The cells C are separated from each other by a network of walls 40 each extending perpendicular to the exit face EF. Each cell C contains a portion 35 of liquid crystal. The transparent active device 3 further comprises at least the electrodes 36 and 37. The electrodes 36 and 37 are arranged for modifying an orientation of the liquid crystal portion 35 in each cell C when an appropriate variation of at least one electrical voltage is applied to these electrodes. The respective liquid crystal portions 35 of the cells C are suitable for the transparent active device 3 to produce the variable optical power. Actually, such transparent active device is a spatial light-phase modulator designed for operating as a variable lens. Depending on the detailed operation of the device 3, the electrodes 36 and 37 may be replaced each with multiple electrodes so that the electrical voltage applied may vary over the extent of the device.

The total optical power of the eyeglass 10 for the supplementary light SL is the sum of the optical power of the transparent active device 3 and that of the back face BF. In parallel, the total optical power for the ophthalmic light OL is the sum of the optical power of the transparent active device 3 and those of both the front face FF and the back face BF.

Generally, the transparent active device 3 switches between two states: a first one intended to be selected when the user gazes at the supplementary image formed by the supplementary light SL, and a second one intended to be selected when the user gazes at the natural image formed by the ophthalmic light OL. For the implementations of Figures 3a, 3b and 4, each state corresponds to a different orientation of the liquid crystal of the portion 30. For the implementation of Figure 5, each one the two states is defined by a set of respective orientations of all the crystal portions 35 which are produced simultaneously. In every case, the optical power of the transparent active device 3 varies from a first value in the first state to a second value in the second state.

Preferably, the difference of the first value minus the second value for the variable optical power of the transparent active device 3 may be greater than the optical power of the front face FF of the eyeglass 10. This ensures that the user can view clearly the supplementary image even if this image is located quite close to his eye, and even if the user is long-sighted, also called hypermetropic. For calculating and comparing the optical power values, signed values are considered in a usual way.

Also in preferred embodiments of the invention, the second state may be a default state of the transparent active device 3. Such default state is effective when the power supply of the transparent active device 3 is off or exhibits an operation failure, for example. This complies with safety reasons, for example when the user is driving, and makes energy savings when the supplementary vision is to be used during limited durations.

One skilled in ophthalmics will understand that the invention is compatible with any ametropia the user may have, in particular myopia and hypermetropia. Indeed, such ametropia may be corrected by shaping appropriately the front face FF and/or the back face BF of the eyeglass 10 for the ophthalmic vision, whereas the transparent active device 3 is used for correcting the ametropia for the supplementary vision, further to the optical power of the eyeglass back face BF.

Finally, it is possible that the transparent active device 3 be adjacent to the back face BF of the eyeglass 10. Then it forms itself a portion of this back face BF at least behind the exit face EF of the light-conducting element 2. The transparent active device 3 may also be glued on the back face BF of the eyeglass 10. In such case, it may be resilient so as to conform with the initial shape of the back face BF. When the exit face EF of the light-conducting element 2 forms directly a portion of the initial back face of the eyeglass 10, then the transparent active device 3 may be glued directly onto the light-conducting element 2, over the exit face EF.

## Claims

1. Eyeglass (10) adapted for providing at least an ophthalmic vision and a supplementary vision to a wearer of said eyeglass, and comprising:
- a front face (FF) and a back face (BF), intended to be oriented respectively away from and towards an eye (20) of the wearer;
- a light-refracting transparent material (1) comprised between the front face (FF) and the back face (BF); and
- a light-conducting element (2) located in the light-refracting transparent material (1), and adapted to output a supplementary light (SL) between the front face (FF) and the back face (BF) of the eyeglass, through an exit face (EF) of said light-conducting element and towards the wearer's eye (20),
the ophthalmic vision corresponding to a natural image formed by light (OL) transmitted by the eyeglass (10) from the front face (FF) to the back face (BF) thereof, and the supplementary vision corresponding to a supplementary image to be viewed by the wearer and formed by the supplementary light (SL),
the light-conducting element (2) being further transparent for the light (OL) of the ophthalmic vision,
**characterized in that** said eyeglass (10) further comprises:
- a transparent active device (3) located between the exit face (EF) of the light-conducting element (2) and a portion at least of the back face (BF) of the eyeglass (10), said transparent active device being adapted for producing a variable optical power depending on a control signal supplied to said transparent active device, with first and second values for said variable optical power which are different from each other and correspond respectively to a first and a second state of the transparent active device,
said transparent active device (3) in the first state being effective for the supplementary light (SL), and the first value of the variable optical power being suitable for the supplementary image to appear sharp to the wearer,
and said transparent active device (3) in the second state being effective for the light (OL) of the ophthalmic vision transmitted through the exit face (EF) of the light-conducting element (2), and the second value of the variable optical power being suitable for the natural image to appear sharp to the wearer.

2. Eyeglass according to Claim 1, wherein the transparent active device (3) is entirely embedded within a rear portion of the light-refracting transparent material (1) located between the exit face (EF) of the light-conducting element (2) and the back face (BF) of said eyeglass.

3. Eyeglass according to claim 1 or 2, wherein the transparent active device (3) is liquid crystal-based.

4. Eyeglass according to claim 3, wherein the transparent active device (3) comprises a portion of liquid crystal (30) contained between two surfaces (3ff, 3bf), at least one of said surfaces being provided with a Fresnel pattern (31 a, 31 b), and further comprises two electrodes (32, 33) arranged for modifying an orientation of said liquid crystal upon a variation of an electrical voltage (V) applied to said electrodes.

5. Eyeglass according to claim 3, wherein the transparent active device (3) comprises an array of cells (C) juxtaposed parallel to the exit face (EF) of the light-conducting element (2), and separated from each other by a network of walls (40) each extending perpendicular to said exit face, each cell containing a portion of liquid crystal (35), and the transparent active device further comprises at least two electrodes (36, 37) arranged for modifying an orientation of the liquid crystal portion in each cell upon a variation of at least one electrical voltage (V) applied to said electrodes, the respective liquid crystal portions of the cells being suitable for the transparent active device to produce the variable optical power.

6. Eyeglass according to any one of the preceding claims, wherein the difference between the first and the second values of the variable optical power of the transparent active device (3) is not equal to the optical power of the front face (FF) of the eyeglass (10).

7. Eyeglass according to any one of the preceding claims, wherein the difference of the first value minus the second value for the variable optical power of the transparent active device (3) is greater than the optical power of the front face (FF) of the eyeglass (10), in signed values.

8. Eyeglass according to any one of the preceding claims, wherein the second state is a default state of the transparent active device (3).

9. Eyeglass according to any one of the preceding claims, wherein respective areas of the transparent active device (3) and the exit face (EF) of the light-conducting element (2) match each other when projected along light rays of the ophthalmic vision onto the back face (BF) of the eyeglass (10).
